# EUROPEAN PATENT APPLICATION

(11) **EP 1 048 876 A2**
(43) Date of publication of application: **02.11.2000**
(21) Application number: 00303604.3
(22) Date of filing: 28.04.2000
(51) Int. Cl.: F16F 13/30

(54) **Adjustable damper**

(30) Priority: 29.04.1999 GB 9909909
(71) Applicant: DRAFTEX INDUSTRIES LIMITED, Edinburgh EH2 3AP, Scotland (GB)
(72) Inventor: Tournier, Pascal Gerard, 44330 La Pallet (FR); Abbo, Christine, 06 200 Nice (FR); Bossis, Georges, 06 1000 Nice (FR); Lemaire, Elisabeth, 06 000 Nice (FR)
(74) Representative: Foster, David Martyn

(57) **Abstract**

A resilient mount (2) for resiliently supporting a member on a body, comprising body fixing means (6) for fixing the mount to the body, member fixing means (4) for fixing the mount to the member, and resilient interconnection means (16,18) interconnecting the body fixing means (6) and the member fixing means (4), the resilient interconnection means (16,18) including a material of adjustable stiffness (18) whereby the stiffness of the interconnection between the body fixing means (6) and member fixing means (4) may be controllably varied.

## Description

The invention relates to a resilient mount, a damper for a vibrating object and a method of manufacturing an elastomeric component having variable stiffness.

According to a first aspect of the invention, there is provided a resilient mount for resiliently supporting a member on a body, comprising body fixing means for fixing the mount to the body, member fixing means for fixing the mount to the member, and resilient interconnection means interconnecting the body fixing means and the member fixing means, the resilient interconnection means including a material of adjustable stiffness whereby the stiffness of the interconnection between the body fixing means and member fixing means may be controllably varied.

According to a second aspect the invention provides a resilient mount for damping vibrations between a member and a body, comprising body fixing means for fixing the mount to the body, member fixing means for fixing the mount to the member, resilient interconnection means interconnecting the body fixing means and the member fixing means, the resilient interconnection means at least partly defining a first chamber for containing a fluid, means defining a second chamber in fluid communication with the first chamber whereby the said vibrations cause fluid transfer between the two chambers, characterised in that the resilient interconnection means includes a material of adjustable stiffness whereby the stiffness of the interconnection between the body fixing means and member fixing means may be controllably varied.

In a third aspect, the invention provides a damper for a vibratable object, comprising resilient interconnection means arranged to have adjustable stiffness and coupled to a mass and coupleable to the vibratable object, characterised in that the mass is substantially free to vibrate in response to variation in the stiffness of the resilient interconnection means whereby to tend to damp vibrations of the object.

In a fourth aspect, the invention provides a method of manufacturing an elastomeric material having a stiffness which is variable in response to an applied magnetic or electrical field comprising providing an elastomeric material containing particles having high magnetic permeability or dielectric permittivity respectively and moulding the material in the presence of a varying magnetic or electrical field respectively.

Engine mounts, dampers and a method of manufacturing an elastomeric material, all according to the invention, will now be described by way of example with reference to the drawings in which:-
Figure 1 is a sectional view of one of the engine mounts;
Figure 2 is a sectional view of another of the hydroelastic engine mounts;
Figure 3 is a sectional view of a further one of the engine mounts;
Figure 4 is a sectional view of yet another one of the engine mounts with electrorheological dampers;
Figure 5 is a sectional view of a further one of the engine mounts, with pressure-controlled dampers;
Figure 6 is a sectional view of one of the dampers;
Figure 7 is a sectional view of another of the dampers;
Figure 8 is a sectional view of a further one of the dampers;
Figure 9a is a schematic view of the elastomeric material;
Figure 9b is a schematic view of a modified form of the elastomer with a magnetic or electrical field applied in a different direction from that of Figure 9a; and
Figure 9c is a schematic view of a further form of the elastomeric material.

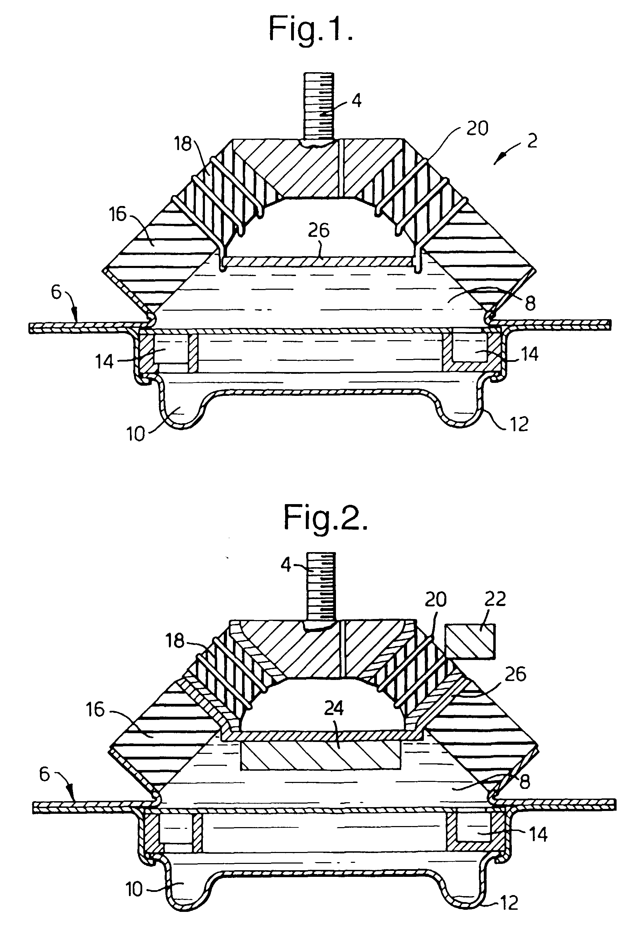

With reference to Figure 1, an engine mount 2 has engine fixing means 4 for fixing to a vehicle engine and body fixing means 6 for fixing to a vehicle body. This mount (and the other similar mounts described below) is generally circular in plan view.

The mount has a working chamber 8 and a compensation chamber 10. The compensation chamber has a resiliently flexible wall 12 and the two chambers are interconnected via a hydraulic conduit 14. The body and engine fixing means 6 and 4 are interconnected by an elastomeric member formed from conventional elastomer 16 and a modified elastomer 18. The modified elastomer 18 has a stiffness which varies in response to an applied electrical field. An electrical winding 20 is wound around each portion of the modified elastomer 18 and may be used to generate an electrical field around the modified elastomer 18.

The mount 2 is fixed to the vehicle using the body fixing means 6. The mount is then used to support an engine which is fixed to the engine fixing means 4. As the engine vibrates, the engine fixing means 4 is allowed to move relative to the body fixing means 6 as a result of the resilience of the elastomeric arch formed by the conventional elastomer 16 and modified elastomer 18. As the arch vibrates, the volume of the working chamber 8 changes and as a result, the fluid pressure within that chamber also changes. Since the wall 12 is flexible, the fluid pressure in the compensation chamber 10 is generally at atmospheric pressure. Thus as the fluid pressure in the working chamber 8 fluctuates, fluid flows between the working chamber 8 and the compensation chamber 10 via the conduit 14. The movement of the mass of fluid in the working chamber 8 has a damping effect on the movement of the elastomeric arch and thus dampens vibration transmission between the engine fixing means 4 and the body fixing means 6.

Direct and/or alternating current may be passed through the windings 20 to generate a field of predetermined orientation and magnitude, in the region of the modified elastomer 18. In this way the stiffness of the resilient interconnection between the body and engine fixing means 6 and 4 may be adjusted. This allows the damping characteristics of the hydroelastic engine mount 2 to be dynamically adjusted to maximise isolation of engine vibrations from the vehicle body, and therefore from the passenger compartment of the vehicle.

Figure 2 shows a modified form of the hydroelastic mount of Figure 1. In the mount of Figure 2, damping masses 22 and 24 are located on the modified elastomer 18 and on a bridging component 26 respectively. The bridging component 26 closes the top of the working chamber 8 and conveniently allows the modified elastomer 18 to be assembled to the lower part of the hydroelastic mount after the working chamber 8 has been closed by the bridging component 26. A similar bridging component 26 is shown in Figure 1. In that case, the bridging component 26 not only closes the working chamber 8 but also serves to complete the electrical circuit of the windings 20.

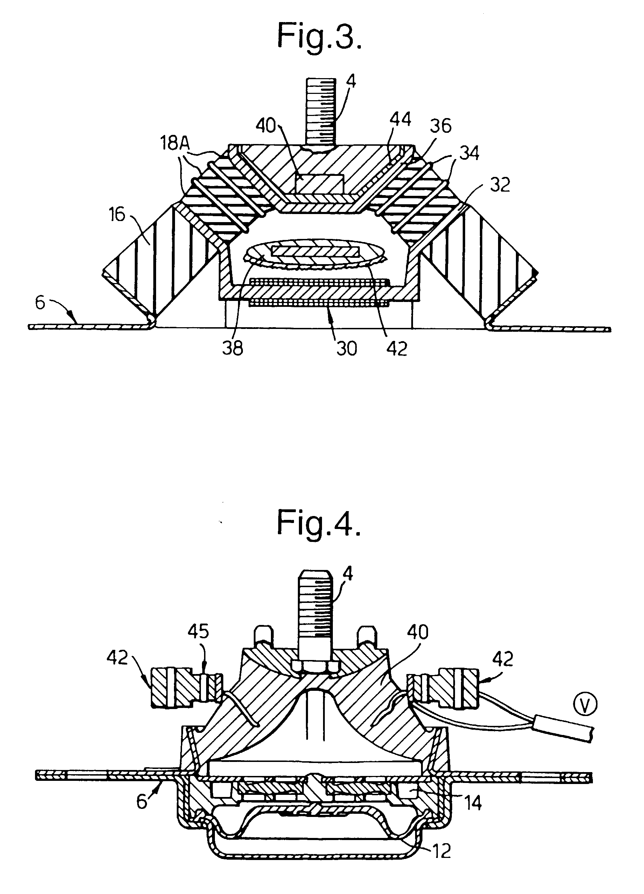

Figure 3 shows a cross-section through an alternative engine mount which shows that the principles of Figures 1 and 2 are applicable to non-hydroelastic mounts. The mount of Figure 3 includes a modified elastomer 18a which is sensitive to an applied magnetic field, in contrast to the modified elastomer 18 of Figures 1 and 2 which is sensitive to an applied electrical field. In the mount of Figure 3, an electrically conductive winding 30 wound around a former 32 generates a magnetic field in the circuit formed by the former 32, intermediate windings 34 formed on the modified elastomer 18a and a magnetically conductive bridging component 36.

The mount of Figure 3 also includes a second magnetic circuit oriented perpendicularly to the circuit described above (i.e. passing through the plane of the Figure). The second circuit is formed by the magnetically conductive components 38 and 40 shown in the Figure. A protective membrane 42 is formed on the lower surface of the magnetically conductive component 38.

The operation of the engine mount of Figure 3 is similar to that of Figures 1 and 2 in that the strength of the magnetic field is controlled by adjusting current in the electromagnet 30. In this way, the stiffness of the modified elastomer 18a is adjusted. By providing two differently orientated magnetic fields, the stiffness of the modified elastomer 18a may be varied also in different orientations. This allows greater control over the characteristics of the engine mount.

The magnetically conductive component 40 in the second magnetic circuit is also isolated from the bridging component 36 of the first magnetic circuit by an isolating membrane 44.

Figure 4 shows a hydroelastic engine mount of similar construction to that shown in Figures 1 and 2. However, the elastomeric interconnection between the engine and body fixing means 4 and 6 is formed of a generally homogenous material 40. Damping masses 42 are coupled to the elastomeric interconnection 40 via coupling members 45 which are rigidly fixed to the elastomeric interconnection 40.

The coupling members 45 are formed from a modified elastomeric material such as materials 18 and 18a of Figures 1 to 3. Thus by applying a magnetic (or as shown in the Figure) an electrical field, the resonance of the oscillatory system formed by the coupling members 45 and the masses 42 may be varied. This in turn varies the damping characteristics of the hydroelastic engine mount.

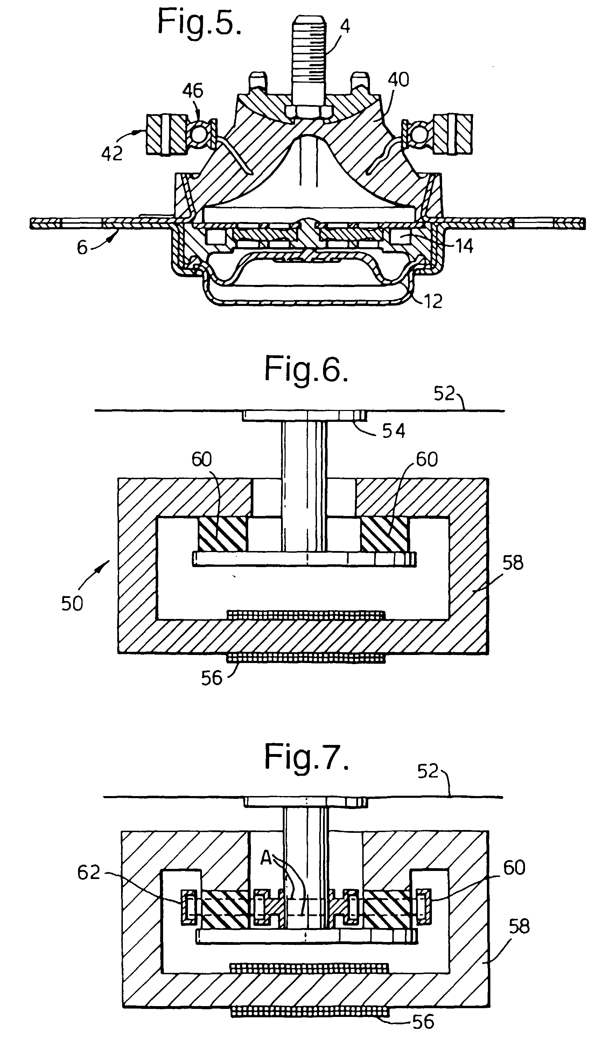

Figure 5 shows an alternative embodiment in which the coupling means 45 of Figure 4 is replaced by a fluid-filled chamber 46. By varying the pressure of the fluid in the chamber 46, the stiffness of the interconnection may be varied.

It should be noted that in the embodiments of Figures 4 and 5, the coupling means 45 and 46 expand and contract as their stiffness is varied. Thus the mass 42 is caused to move. This effect may be used in an "active" damper, for example to generate vibrations in antiphase to the vibrations present in the engine mount. This is achieved by applying predetermined alternating components to the control signal (the applied voltage in the embodiment of Figure 4 and the pressure variations in the embodiment of Figure 5) to cause the mass to vibrate.

Figure 6 shows a development of the idea of an active damper. The damper 50 is attached to a vibrating object such as an engine mount or a vehicle body 52 by means of a mount 54. An electrically conductive winding 56 is wound on a magnetically conductive former 58. The former forms a magnetic circuit which passes through elastomer blocks 60. The elastomer blocks 60 are sensitive to an applied magnetic field and are caused to contract and expand when such a field is applied.

In this way, a control current supplied to the winding 56 causes the mass formed by the former 58 and the winding 56 to vibrate since it is suspended only by the vibrating blocks 60. It will be noted that the static stiffness of the oscillating structure may be adjusted by a non-alternating component of the control signal supplied to the winding 56. This serves to adjust the resonant frequency of the damping structure. An alternating component of the control signal may be used additionally as described above to generate vibration in antiphase further to enhance the damping effect on the vibrating object 52.

Many variations to this general idea of mounting a damping mass to a vibrating object via a mechanical interconnection having variable stiffness and/or dimensions may be made. For example, the modification shown in Figure 7 includes electrodes 62 which are fixed on the object 52 and which serve further to control movement of the mass in directions other than that controlled by the winding 56. The electrodes as shown in the Figure serve to control movement of the mass generally along the dotted lines A. For control in other directions, for example, through the plane of the Figure, electrodes may be mounted above and below the plane of the Figure to generate a field passing through the Figure. Similarly, additional magnetic circuits having fields oriented along different axes could be included in the damper to control stiffness and generate vibrations in different directions thus providing "3D" control of the mass 58.

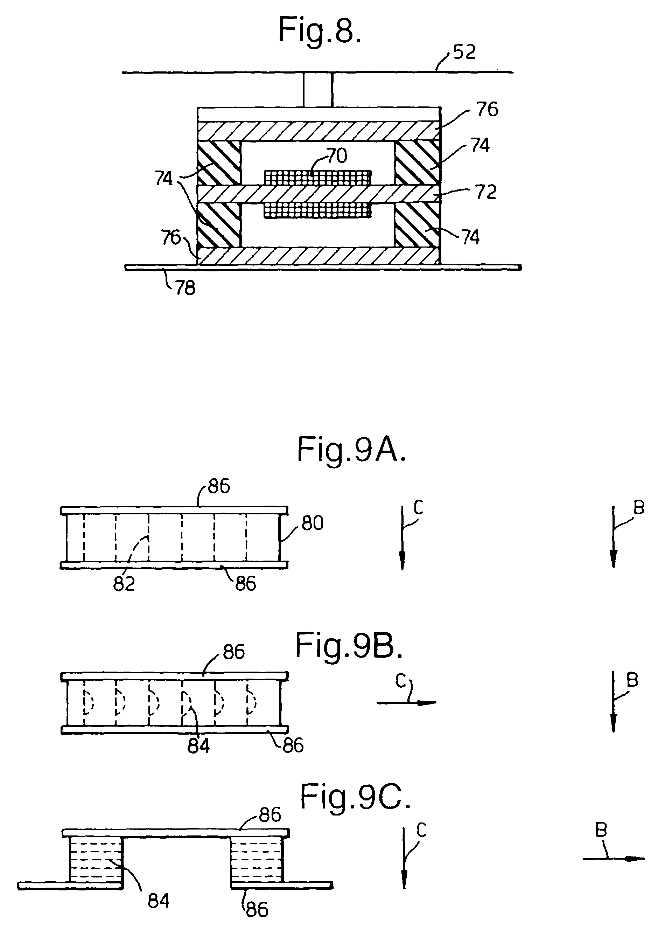

Figure 8 shows a further variation in which a central electrical winding 70 is mounted on a central magnetically conductive component 72. The winding 70 generates a magnetic field and the circuit passes through elastomeric blocks 74 and through outer magnetically conductive components 76. The damper may also be fixed at its lower end 78 thus providing a variable stiffness coupling between the object 52 and an object attached to the mounting 78.

The mounts and dampers described above use materials which react to magnetic or electrical fields. Such materials may be produced by including particles having high dielectric permittivity or magnetic permeability (for electrical or magnetic sensitivity respectively) which are sensitive to an electrical or magnetic field respectively. These particles are incorporated in the material (typically an elastomer) during moulding.

Typically the moulding process is carried out in an electrical/magnetic field so that the particles are aligned in the material once it has set. In this way "fibres" of the particles are created. The applied field during setting may be static or may also include an alternating high frequency component.

Furthermore, a part being moulded may be rotated during setting to cause sedimentation of the particles at the edge of the part. Rotation during setting may also be used to orient the particles in sheets to obtain something approaching wound "fibres". Similar effects to rotation may also be obtained using a reciprocating or oscillatory motion during setting.

Several different effects may be obtained using these materials. For example, an increase of the stiffness of the elastomer material may be obtained by aligning the fibres in the direction of stretching or compression of the material. When a field is applied in the same direction as the fibres (which is also the same direction as the field which should be applied during setting) the stiffness of the elastomer in that direction is increased.

Alternatively, the elastomer may be softened by the application of a field. In this case, the field which softens the elastomer is applied in a direction perpendicular to the orientation of the "fibres" (which is also perpendicular to the direction of the field applied during setting).

These two possibilities are shown in Figures 9A and 9B respectively. An elastomeric material 80 has fibres which are aligned as shown generally by dotted lines 82. A field applied during setting is shown by arrows B and the field applied in operation is shown by arrows C.

In the case of Figure 9B, the fibres are caused to deviate when the field is applied in operation which tends to provide reduced stiffness in the direction generally of arrow B.

Figure 9C shows how the shear stiffness of a system may be increased. When the field C is applied, the fibres tend to bunch as shown by the dotted lines 84. This increases the stiffness between the electrode plates 86 in the shear direction generally parallel with the direction of the field applied during setting B.

## Claims

1. A resilient mount for resiliently supporting a member on a body, characterised by body fixing means (6) for fixing the mount to the body, member fixing means (4) for fixing the mount to the member, and resilient interconnection means (16,18) interconnecting the body fixing means (6) and the member fixing means (4), the resilient interconnection means including a material (18) of adjustable stiffness whereby the stiffness of the interconnection between the body fixing means (6) and member fixing means (4) may be controllably varied.

2. A resilient mount for damping vibrations between a member and a body, comprising body fixing means (6) for fixing the mount to the body, member fixing means (4) for fixing the mount to the member, resilient interconnection means (16,18) interconnecting the body fixing means (6) and the member fixing means (4), the resilient interconnection means (16,18) at least partly defining a first chamber (8) for containing a fluid, means defining a second chamber (10) in fluid communication with the first chamber (8) whereby the said vibrations cause fluid transfer between the two chambers (10,8), characterised in that the resilient interconnection means (16,18) includes a material (18) of adjustable stiffness whereby the stiffness of the interconnection between the body fixing means (6) and member fixing means (4) may be controllably varied.

3. A resilient mount according to claims 1 or 2, characterised in that the stiffness of the adjustable material (18) is varied by generating an electrical field in the region of the material (18).

4. A resilient mount according to any preceding claim, characterised in that the stiffness of the adjustable material (18A) is varied by generating a magnetic field in the region of the material (18A).

5. A resilient mount according to any preceding claim, characterised in that the stiffness of the adjustable material (18A) is in a plurality of directions and wherein the stiffness in each of those directions is controllable separately.

6. A resilient mount according to claim 2, characterised in that the resilient interconnection means (16,18) is of hollow cone shape, with the adjustable material (18) being incorporated therein in the form of a frusto-conically shaped ring.

7. A resilient mount according to claim 6, characterised in that a wall (26) extends across the interior of the hollow cone shape adjacent the larger diameter end of the frusto-conically shaped ring of the adjustable material (18) and partly defines the first working chamber (8).

8. A resilient mount according to claim 6, characterised in that the stiffness of the adjustable material (18) is varied by generating an electrical field in the region of the material (18), and in that the said wall (26) forms part of an electrical circuit for generating the field.

9. A resilient mount according to claims 7 or 8, characterised by a damping mass (24) carried by the said wall (26).

10. A resilient mount according to any preceding claim, characterised in that the member is a vehicle engine and the body is a vehicle body.

11. A damper for a vibratable object, comprising resilient interconnection means (45,46,60,74) arranged to have adjustable stiffness and coupled to a mass (42,50,76) and coupleable to the vibratable object, characterised in that the mass (42,50,76) is substantially free to vibrate in response to variation in the stiffness of the resilient interconnection means (45,46,60,74) whereby to tend to damp vibrations of the object.

12. A damper according to claim 11, characterised in that the stiffness of the resilient interconnection means (45,60,74) is varied by generating a magnetic field in the region of the interconnection means (45,60,74).

13. A damper according to claim 11 or claim 12, characterised in that the stiffness of the resilient interconnection means is varied by applying an electrical field.

14. A damper according to claim 11, characterised in that the resilient interconnection means (46) includes a fluid-filled chamber and in that the stiffness of the resilient interconnection means (46) is varied by adjusting the fluid pressure within the fluid-filled chamber.

15. A damper according to any of claims 11 to 14, characterised by a damper control system operable to vary the stiffness of the resilient interconnection means (45,46,60,74) in response to the vibration of the object.

16. A damper according to any of claims 11 to 15, characterised in that the resilient interconnection means (45,46,60,74) is operable to cause relative movement between the mass (42,50) and the vibrating object whereby the mass (42,50) may be caused to oscillate generally in antiphase with the object.

17. A damper according to any of claims 11 to 16, characterised by a plurality of resilient interconnection means each oriented generally along different respective directions, the resilient interconnection means of each direction being respectively adjustable.

18. A method of manufacturing an elastomeric material having a stiffness which is variable in response to an applied magnetic or electrical field, characterised by the steps of providing an elastomeric material containing particles having high magnetic permeability or dielectric permittivity respectively and moulding the material in the presence of an applied varying magnetic or electrical field respectively.

19. A method according to claim 18, characterised in that the applied field includes an alternating component.

20. A method according to claim 18 or claim 19, characterised in that the applied field includes a non-alternating component.

21. A method according to any of claims 18 to 20, characterised by producing relative movement between the elastomeric material and the applied field during reticulation of the material.

22. A method according to any of claims 18 to 21, characterised by the step of reciprocating the component during setting.
